# EUROPEAN PATENT SPECIFICATION

(11) **EP 2 944 755 B1**
(45) Date of publication and mention of the grant of the patent: **24.06.2020**
(21) Application number: 15167586.5
(22) Date of filing: 13.05.2015
(51) Int. Cl.: E06B 9/323, F16B 5/12

(54) **FASTENER FOR A SUNSHADE**
BEFESTIGUNGSELEMENT FÜR EINEN SONNENSCHUTZ
DISPOSITIF DE FIXATION D'UN PARE-SOLEIL

(30) Priority: 14.05.2014 FI 20145436
(43) Date of publication of application: 18.11.2015
(73) Proprietor: Suomen Visor Oy, 90440 Kempele (FI)
(72) Inventor: Haapalahti, Teuvo, FI-90440 Kempele (FI)
(74) Representative: Berggren Oy, Helsinki & Oulu

(56) References cited:
- EP-A1- 0 628 453
- EP-A1- 2 677 109
- DE-B- 1 059 301
- GB-A- 132 914
- GB-A- 2 495 432
- US-A- 5 413 297

## Description

The object of the invention is a fastener for a sunshade, which fastener has gripping means for attaching to an edge rail of the sunshade and a suspension element for attaching to an edge profile of a glazing, the suspension element comprising a support surface to be placed against the edge profile or part of the edge profile of the glazing.

Blinds are often used as sunshades in glazed balconies to prevent the entry of excess solar radiation to the balcony. Sunshades are generally fastened to the edge profile of the balcony glazing with separate fasteners, which have gripping means for attaching to the sunshade and a suspension element for attaching to the edge profile of the balcony glazing.

Patent documents WO 2007/065972 and FI 123588 B and the Finnish utility model No. 9831 describe fasteners for sunshades comprising gripping projections for attaching to the edge rail of the sunshade and a hook-type fastening element for attaching to the edge profile of the glazing. In documents WO 2007/065972 and FI 123588 B the hook-type fastening element is fitted tightly inside a groove in the edge profile of the glazing, and in the Finnish utility model No. 9831 the hook-type fastening element is fitted tightly around the other flank of the groove of the edge profile. In known fasteners the attachment to the edge profile is achieved by tight fitting of the hook-type element of the fastener and the edge profile. A problem with the use of these kinds of fasteners is the dimensional variances and manufacturing tolerances in the edge profiles of the glazing, because of which the widths of the groove of the edge profile and the flank of the groove vary. Painting treatment of the edge profile and especially thickenings of the paint coat caused by the curtaining of the paint also increase the number of dimensional variances. Due to the dimensional variances, the attachment of the fasteners to an exactly desired point in the edge profile is difficult and it may require the edge profile or fastener to be machined, which slows down the installation work.

Document US 5413297 A discloses a fastener according to the preamble of claim 1.

It is an object of the invention to introduce a fastener for a sunshade, with which disadvantages and drawbacks relating to the known state of the art can be eliminated.

The objects of the invention are achieved with a fastener for a sunshade, which is characterized in what is disclosed in the independent claims. Some advantageous embodiments of the invention are illustrated in the dependent claims.

The fastener, which is the object of the invention, comprises gripping means for attaching to the edge rail of the sunshade and a suspension element for attaching to the edge profile of the glazing. The suspension element comprises a support surface to be placed against the edge profile or part of the edge profile of the glazing. In the invention the suspension element has been dimensioned to loosely surround part of the edge profile of the glazing and the suspension element comprises at least one friction element increasing the friction between the edge profile and support surface. The loose dimensioning of the suspension element refers to that there remains a small gap between the suspension element, attached to the edge profile and the surface of the edge profile, facilitating the installation of the fastener. Thus, the suspension element does not attach to the edge profile with a tight fit, nor does the surface of the suspension element surrounding the edge profile of the glazing immediately press tightly against the surface of the edge profile when installing the fastener in place. The loose dimensioning of the suspension element makes it possible to move the suspension element suspended on the edge profile in the longitudinal direction of the edge profile when the support surface and the friction element on it are pressed with force against the edge profile.

The fasteners according to the invention are especially well suited for such a fastening method, in which the sunshade is attached to the edge profiles of the glazing both from its upper and lower edges and the sunshade is tightened from the section between the upper and lower edges. Such a method for fastening a sunshade is typically used, for example, when fastening sunshades of balcony glazing, in which the edge rail in the upper edge of the sunshade is attached to the edge profile of the upper edge of the glazing, and the edge rail in the lower edge of the sunshade is attached to the edge profile of the lower edge of the glazing. Similarly, the sunshade can be attached, for example, to a window so that the edge rail in the upper edge of the sunshade is attached to the upper edge of the frame surrounding the window pane, i.e. the edge profile of the window, and the edge rail in the lower edge of the sunshade is attached to the lower edge of the frame. The upper and lower edge rails are connected to each other with conductor wires, which guide the actual shade part protecting from the sun. The conductor wires are mounted tight in the installation step of the sunshade so that the shade part would remain straight in wind and when someone is moving close to the shade. Due to the pulling force of the conductor wires, the fastener presses with force against the surface of the edge profile of the glazing, preventing the fastener from rising off from the surface of the edge profile. It is an idea of the invention that the friction element or friction elements on the support surface setting against the edge profile of the fastener increase the friction between the support surface and the edge profile so big that it prevents the fastener from moving on the surface of the edge profile in the longitudinal direction of the edge profile in usual load conditions applied to the sunshade. After the sunshade has been installed in place, the fastener thus locks immovably in place to the edge profile.

The suspension element comprises a supporting element, a base and a first side, and the edge profile or part of the edge profile of the glazing can be loosely fitted between the supporting element and first side.

In a second advantageous embodiment of the fastener of the invention the supporting element, the base and the first side form a chute with a mouth. The width of the mouth is smaller than the width of the inner part of the chute. The chute can be formed by simply shaping the end of the sheet-type supporting element to form a chute. The width of the inner part of the chute refers here to the biggest free width of the inner part of the chute in a direction perpendicular to the plane of the supporting element. The open mouth of the chute is narrower than the width of the inner part of the chute. By turning the fastener to a position deviating from the original fastening position, the edge profile of the glazing can be fitted inside the chute, the free edge of the wall of which is wider than the mouth of the fastener. When the fastener is turned to its final fastening position in relation to the edge profile, the free edge of the edge profile has no room to exit from the chute through the mouth.

The friction element is located in the base. The friction element in the base sets against the outermost edge surface of the edge profile of the glazing, and compressive force is applied to it due to the traction force of the conductor wires of the sunshade, which increases the friction between the edge profile and friction element.

In addition, at least one friction element can be located in the surface of the supporting element and/or first side. The supporting element and the first side set against the surfaces parallel to the glazing of the edge profile, so no compressive force is applied to the friction element due to the traction force of the conductor wires of the sunshade.

The friction element may comprise a flexible layer, which covers at least part of the support surface. The flexible layer is easily compressible, so it does not interfere with the placing of the edge profile of the glazing into the groove between the supporting element and first side. The material of the flexible layer can be, for example, rubber, soft plastic, neoprene or silicon. In a fastener fitted in place the flexible layer of the friction element presses against the surface of the edge profile so that friction force is generated between the surface of the edge profile and the flexible layer against movement in the longitudinal direction of the edge profile.

Alternatively or in addition, the said friction element may comprise a self-adhesive or glue surface covering at least part of the support surface. The self-adhesive or glue surface can be coated with a detachable film, which is removed from the top of the self-adhesive or glue surface before the fastener is set in place. The self-adhesive or glue surface may be a few millimetres thick, and it can be compressible.

The friction element comprises a projection protruding from the plane of the support surface, which has at least one point to be set against the edge profile of the glazing. The said projection preferably has a first point to be placed against the edge profile of the glazing, the first point pointing to the first direction, and a second point pointing to the second direction. In a fastener set in place the point or points of the projection press into the small notches and recesses in the surface of the edge profile of the glazing, in which case the points of the projection form a mechanical "non-skid device" increasing the friction to the fastener. The friction-increasing impact of the points is the stronger, the better and deeper the point of the projection presses into the notches of the surface of the edge profile, i.e. the sharper the point of the projection is. By using at least two projections and by directing the points of the projection away from each other in an acute angle in relation to the surface of the edge profile, the magnitude of the friction force can efficiently be increased against the movement in the longitudinal direction of the edge profile.

In yet another advantageous embodiment of the fastener of the invention the base has a first end and a second end and the said projections are formed by shaping at least a part of the first end and/or second end as a projection protruding from the plane of the support surface. The fastener can be made of any suitable formable material, such as plastic. The fastener of the invention is preferably formed of a metal plate, such as steel or aluminium plate by using suitable plate machining methods. The ends of the support surface can then be provided with an edge protrusion, i.e. projection protruding from the plane of the support surface, for example, by die cutting or pressing, the edge surface of the projection forming a rectangular point. The projection can be formed by using plate machining tools used in the manufacture of the fastener so that no extra costs will incur of the making of the projection.

The fastener of the invention comprises suitable gripping means for attaching to the edge rail of the sunshade. Depending on the profile shape of the edge rail, the can be of different structures and shapes. For example, the gripping means can comprise a first attachment projection attachable to the first part of the edge rail and a second attachment projection attachable to the second part of the edge rail. The edge rail can comprise a groove, inside which the attachment projections are set, or the attachment projections can adhere to the outer surface of the edge rail.

It is an advantage of the fastener of the invention that even the big manufacturing tolerances in the edge profile of the glazing do not interfere with or prevent the attachment of the fastener or have an impact on the fastener staying in place.

It is a further advantage of the invention that its attachment to the edge rail of the sunshade is fast and simple.

The invention will next be explained in detail, referring to the enclosed drawings in which
Figure 1a illustrates an example of a sunshade fastener of the invention, seen obliquely from above;
Figure 1b illustrates the fastener in Figure 1a attached to the edge rail of the sunshade;
Figure 1c illustrates the attachment of the fastener in Figures 1a and 1b to the edge rail of the sunshade;
Figures 2a, 2b and 2c are exemplary illustrations of some advantageous embodiments of the sunshade fastener, seen obliquely from above;
Figure 3 is an exemplary illustration of a sunshade fastener of the invention, attached to the edge profile of a glazing;
Figures 4a and 4b are exemplary illustrations of an advantageous embodiment of a sunshade fastener of the invention as cross-sectional views; and
Figure 5 is an exemplary illustration of a second advantageous embodiment of a sunshade fastener of the invention as a cross-sectional view.

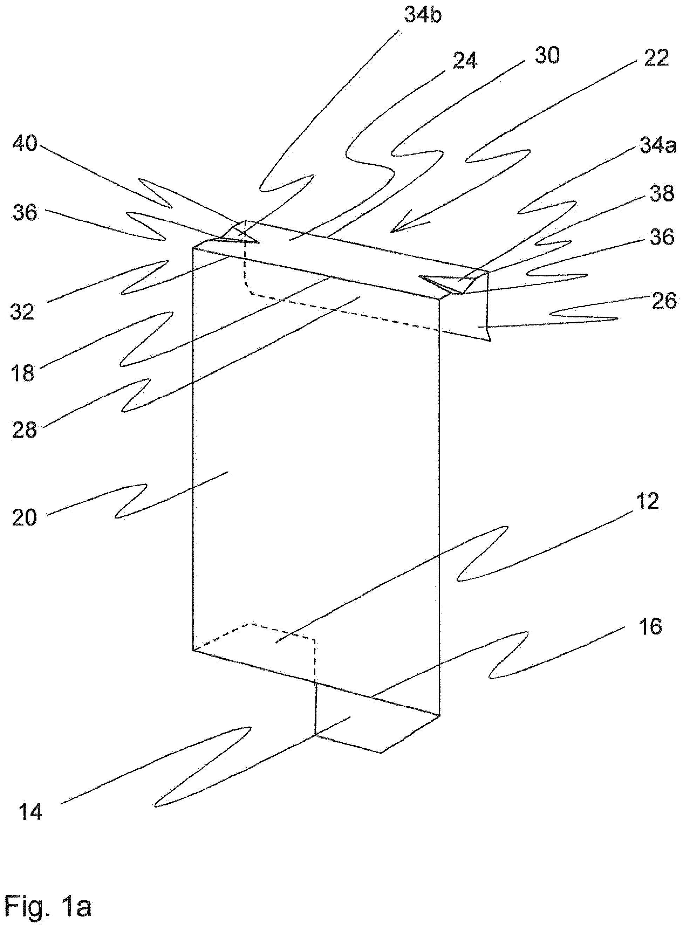

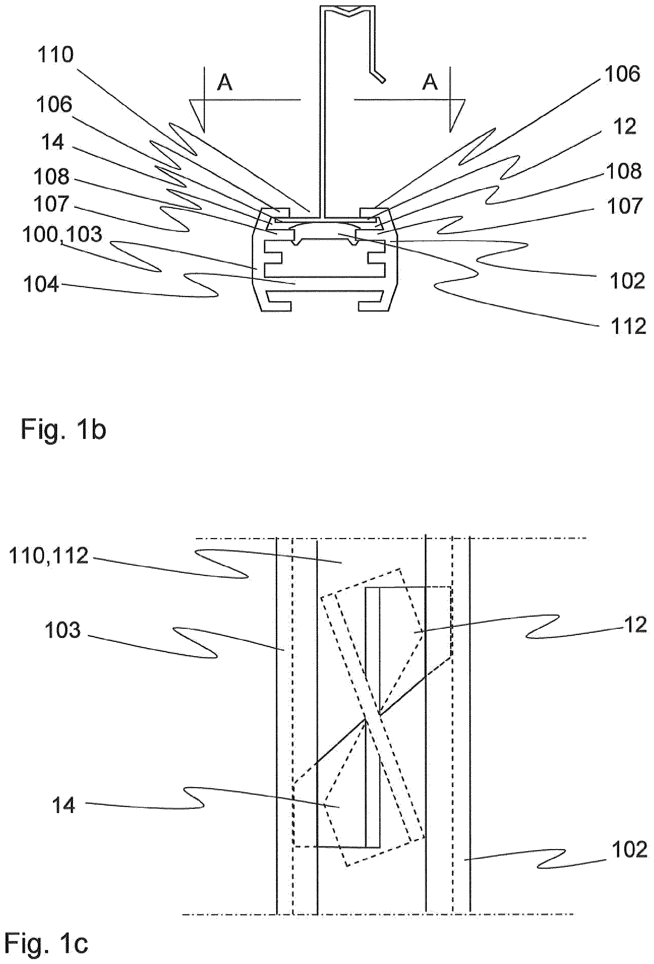

Figure 1a is an exemplary illustration of a sunshade fastener of the invention, seen obliquely from above. The fastener has a sheet-type, rectangular supporting element 20 with a first edge 16 and a second edge 18 parallel to the first edge. The first edge has two sheet-type fastening projections; a first fastening projection 12 and a second fastening projection 14. The first fastening projection turns from the first edge of the supporting element substantially at a right angle to a first direction, and the second fastening projection turns from the first edge of the supporting element substantially at a right angle to a second direction. Thus, the first and second fastening projections are at a plane, which is substantially at a right angle in relation to the plane of the fastening element. The longitudinal direction of the fastener is identical with the direction of the first edge 16 of the supporting element. Thus, the length of the fastener is equal to the length of the first edge of the supporting section. The fastener is mounted in place to the edge rail of the sunshade so that the first edge of the supporting element is substantially parallel to the longitudinal direction of the edge rail (Figure 1c).

The first fastening projection 12 is located at the first end of the fastener, seen in the longitudinal direction of the fastener, and the second fastening projection 14 is located at the second end of the fastener, seen in the longitudinal direction of the fastener. The first and second fastening projections are parts of substantially the same shape and size. The width of the butt section of the fastening projection, i.e. its extension in the direction of the first edge of the supporting element is substantially half of the width of the supporting element. The second longitudinal edge of the fastening projections is inclined so that the width of the point of the fastening projections is substantially smaller than the width of the butt section.

In the second edge 18 of the supporting element there is a substantially flat base 24, turning to a substantially right angle from the plane of the supporting element, abutting a first edge 30 and a second edge 32 in the lateral direction. The base 24 forms a support surface, which sets against the surface of the edge profile of the glazing in a fastener set in place. From the first edge of the base, a first side 26 turns to a substantially right angle from the plane of the base. The free edge of the first side is bent slightly outwards from the supporting element as a guide edge. Small projections 34a, 34b have been shaped by binding to the free edges of the first end 38 and second end 40 of the base, the projections rising from the plane of the base between the first side and the supporting element. At the place of the projections the free edge of the end of the base is bent to an angle so that a projection point 36 is provided to the end. The point 36 of the first projection 34a at the first end 38 points obliquely away from the first end, and the second point 34b at the second end 40 points obliquely away from the second end. The projections and especially their points act as friction elements, which increase the friction between the base and the surface of the edge profile setting against the base, when the fastener has been mounted in place to the edge profile.

The supporting element 20, the first side 26 and the base 24 together form a suspension element 22, by means of which the fastener can be attached to the edge profile of the balcony glazing. The fastener is made of a single rectangular, sheet-type piece by forming the fastening projections to the first edge of the piece and the suspension element to the second edge of the piece. The material of the supporting element is aluminium. The thickness and rigidity of the sheet-type sections of the fastener is so big that the fastener is a substantially rigid piece. This means that the parts of the fastener, especially the fastening projections, are not significantly flexible, i.e. no significant reversible deformation occurs in them when the fastener is set in place.

Figures 1b and 1c are exemplary illustrations of the attachment of the fastener shown in Figure 1a to the edge rail 100 of the sunshade. Figure 1b is a cross-sectional view of the fastener attached to the edge rail, and Figure 1c is a top view of the fastener in Figure 1b, depicted from sectional plane A-A. The edge rail of the sunshade is a uniform aluminium profile with two sides, the first side 102 and the second side 103, which are connected to each other by a neck 104. The cross sections of the first and second side are mirror images of each other. The edges of the sides, the inner surfaces of the sides, comprise edge laths 106 extending in the longitudinal direction of the edge rail, limiting between them the gap 110. On the inner surfaces of the sides, between the upper edge laths and neck, there is provided a projection 107 in the longitudinal direction of the edge rail so that there is a groove 108 between the upper edge lath and the projection. Between the first side 102 and the second side 103 there is a flexible strip 112, manufactured of plastic and with an upwards slightly convex shape, its edges supporting to the free edges of the projections.

The fastener of the invention is attached to the edge rail so that the point of the first fastening projection 12 is set to the groove 108 of the first side 102 of the edge rail 100, and the point of the second fastening projection 14 is set to the groove 108 of the second side 103 of the edge rail. The height of the groove, thickness of the strip 112 and thicknesses of the fastening projections can be dimensioned so that the fastener set in place forces the strip to move slightly towards the neck 104. In this case force is applied from the strip of flexible material to the fastener set in place, pressing the points of the fastening projections tightly against the edge laths 106. Frictional forces are then effective between the edge laths and fastening projections and, on the other hand, between the fastening projections and the strip, preventing the fastener set in place from moving in the gap 110.

The fastener is attached so that the fastener is put on top of the gap 110 of the edge rail 100 to a position inclined in relation to the longitudinal direction of the edge lath and depicted with broken lines. In this position, the fastening projections 12, 14 of the fastener have room to move through the edges of the gap 110 against the strip 112. The fastener is then pressed towards the strip and simultaneously rotated around the normal axis of the strip to the locking position depicted with an unbroken line in Figure 1c. In the locking position the points of the fastening projections extend into the grooves of the sides 102, 103, and the longitudinal direction of the fastener is substantially parallel to the longitudinal direction of the edge rail. The fastener is detached from the edge rail by rotating the fastener to the opposite direction.

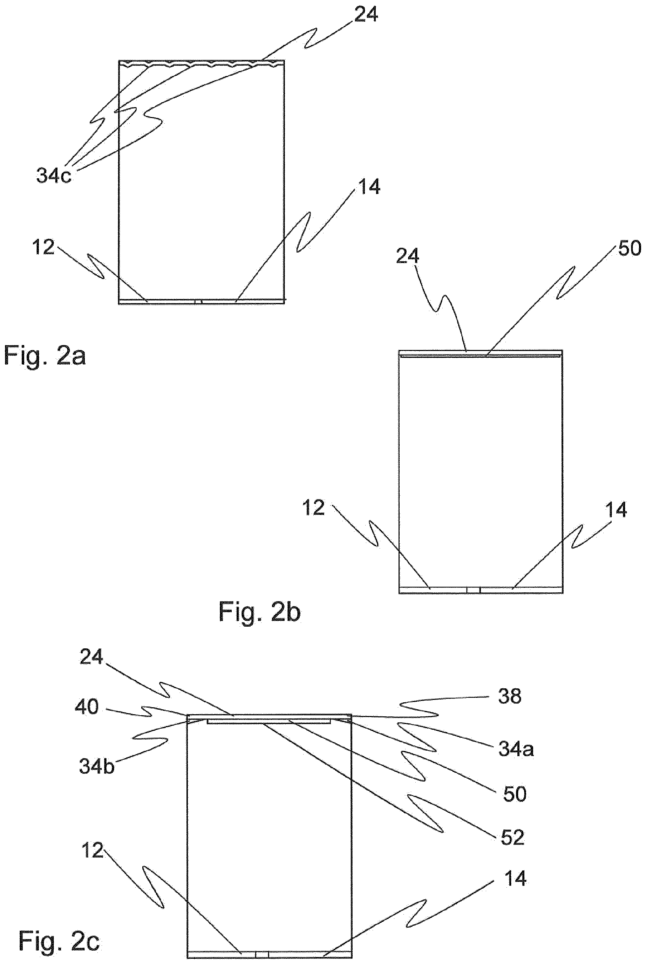

Figures 2a, 2b and 2c are exemplary illustrations of advantageous embodiments of the sunshade fastener of the invention as vertical cross-sectional views, cross-sectioned at the base 24 of the chute-like suspension element. In the embodiment in Figure 2a, a number of conical projections 34c are provided into the surface facing the fastening projections 12, 14 of the base and formed by machining conical recesses into the opposite surface of the base by using a suitable striking tool. In a fastener set in place, the points of the conical projections press against the surface of the edge profile of the glazing and thus increase the friction between the base 24 and the edge profile.

In the embodiment in Figure 2b, a flexible layer 50 if attached to the surface facing the fastening projections 12, 14 of the base 24. The material of the flexible layer can be rubber, neoprene, silicon, plastic or some other suitable compressible material. In a fastener set in place the flexible layer acts as a friction element, which presses tightly against the surface of the edge profile of the glazing, thus increasing the friction between the base 24 and edge profile. In the surface of the flexible layer there may be lamellas, which further increase the friction between the flexible layer and edge profile.

In the embodiment illustrated in Figure 2c, a compressible adhesive tape 50 is attached to the surface facing the fastening projections 12, 14 of the base 24. The adhesive surface 52 of the tape is coated with a detachable protective film, which is removed from the adhesive surface immediately before the fastener is installed in place (the protective film is not shown in the Figure). The ends 38, 40 of the base 24 of the suspension element further comprise the projections 34a, 34b depicted in the illustration of Figure 1. In the fastener installed in place the adhesive tape acts as a gripping element, by means of which the fastener set in place stays put in the edge profile at the initial phase of the installation. The fastener installed permanently in place stays in place both by means of the adhesive tape and projections. Thus in this advantageous embodiment of the fastener both the adhesive tape 50 and the projections 34a, 34b act as friction elements.

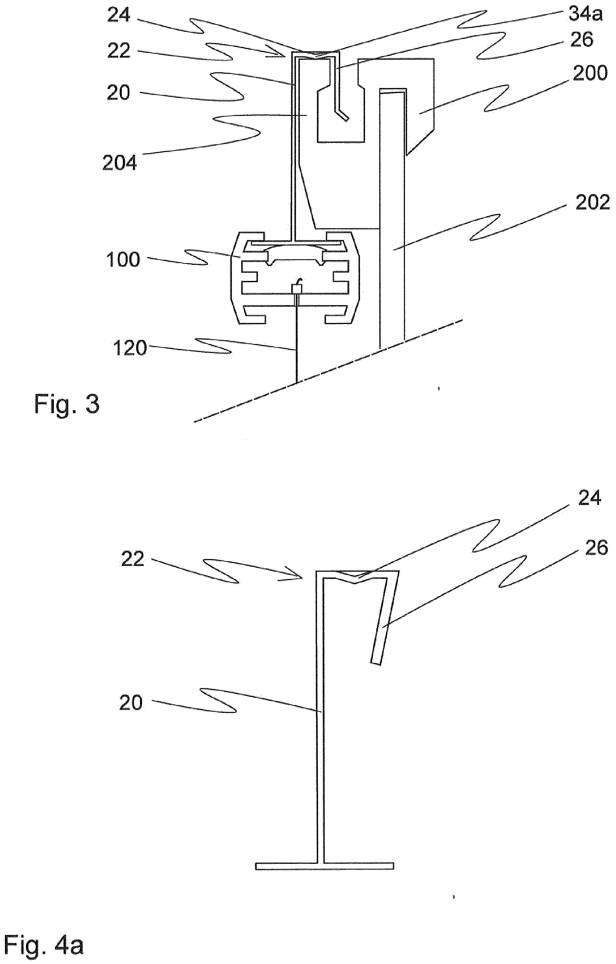

Figure 3 is an exemplary illustration of a sunshade fastener of the invention attached to the edge profile 200 of balcony glazing. Balcony glazing typically consists of glazing elements, comprising a rectangular glass pane 202 with an aluminium edge profile 200 in its upper and lower edge. In the edge of the edge profile there is a groove opening away from the middle section of the glass pane, to the wall 204 of which the fastener is suspended by means of the fastener's suspension element 22. In Figure 3 there is illustrated the attachment of the fastener to the edge profile in the upper edge of the balcony glazing. The fastener is attached in a similar way to the edge profile in the lower edge of the balcony glazing.

When installing the sunshade, the fasteners are first attached in place to the edge laths 100 of the sunshade. Then the fasteners attached to the edge laths are fitted into the edge profiles 200 of the glazing so that the wall 204 of the edge profile sets between the first side 26 of the suspension element 22 and the supporting element 20, and the upper edge of the wall is set against the base 24. A respective fitting is made at both ends of the sunshade. In the fastener of the invention, the distance between the first side and the supporting element is dimensioned slightly bigger than the thickness of the edge profile wall. Thus, the wall of the edge profile sets loosely between the first side and the supporting element. Next, the conductor wires 120 connecting the first and second edge lath 100 of the sunshade are tightened so that the edge laths pull the fasteners attached to them against the edge profiles. The friction elements, such as projections 34a, are then pressed tightly to the surface of the edge profile. A frictional force is thus generated between the support surface and the edge profile, which prevents the fastener from moving on the surface of the edge profile in the edge profile's longitudinal direction. The tightened conductor wires again prevent the fastener from rising off from the edge profile so that the wall of the edge profile remains in place in the suspension element 22 of the fastener.

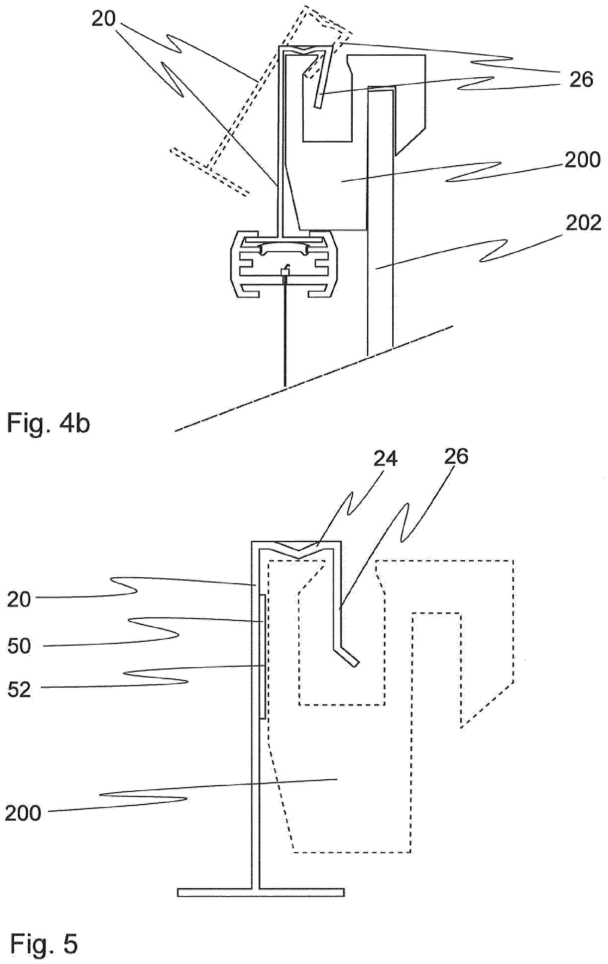

Figures 4a and 4b are exemplary illustrations of an advantageous embodiment of a sunshade fastener of the invention. Figure 4a is a cross-sectional view of the sunshade fastener. The embodiment shown in the Figure is principally similar to the embodiments of the fastener illustrated above, and the same names and reference numbers are used of the structural parts of the fastener depicted above. The embodiment in Figure 4a deviates from the above illustrated embodiments of the fastener in that the first side 26 of the suspension element 22 is in an inclined position in relation to the supporting element 20, i.e. the supporting element and the first side are not parallel. The distance of the free edge of the first side from the surface of the supporting element is smaller than the width of the base 24. The mouth of the chute formed by the supporting section 20, base 24 and first side 26 is thus narrower than the width of the inner part of the chute in a direction perpendicular to the plane of the supporting element.

Figure 4b illustrates the installation of the fastener in Figure 4a to the edge profile 200 of the glazing. The wall of the edge profile has a free edge, the width of which in a direction perpendicular to the glass pane 202 is slightly bigger than the width of the mouth of the fastener chute, i.e. the distance between the free edge of the first side 26 and the supporting element 20. The fastener is mounted to the edge profile so that the fastener is first tilted into the position illustrated with broken lines in Figure 4b. In this position the free edge of the edge profile 200 can be fitted inside the chute-like part through the mouth of the chute. Then the fastener is turned into the final fastening position shown with an unbroken line in Figure 4b. When the fastener and edge profile are in this position in relation to each other, the free edge of the edge profile does not have room to exit from the chute through the mouth of the chute. This makes possible, for example, the suspension of the fasteners to their planned places in the edge profile of the lower edge of the glazing without separate fastening elements already in the first stages of the installation of the sunshade.

Figure 5 illustrates in an exemplary manner a cross-sectional view of a second advantageous embodiment of the sunshade fastener of the invention. The embodiment of the fastener shown in the Figure is principally similar to the embodiments of the fastener shown above, and the same names and reference numbers are used of the previously shown structural parts of the fastener. The embodiment illustrated in Figure 5 deviates from the above shown embodiments of the fastener in that the friction element increasing the friction between the edge profile of the glazing and the support surface of the fastener is located in the surface of the supporting element 20 facing the edge profile. The friction element is a double-sided adhesive tape 50 with a glue surface 52 on both sides. The adhesive tape is attached to the surface of the supporting element with the adhesive layer of the first surface. The adhesive layer of the second surface of the adhesive tape is covered with a detachable film, which is removed upon installation of the fastener. After the removal of the film the fastener is mounted to the correct place of the edge profile and the fastener is pressed against the edge profile so that the second surface of the adhesive tape is compressed against the side surface of the edge profile of the glazing. After this the fastener stays in place in the edge profile. Instead of the supporting element the adhesive tape acting as the friction element can also be positioned to the surface of the first side 26 or base 24 facing the edge profile. The first side of the fastener can be parallel with the supporting element as in Figure 5, or it can be inclined in relation to the supporting element.

Some advantageous embodiments of the sunshade fastener of the invention have been depicted above. The invention is not restricted to the solutions specified above, but the inventional idea may be applied in several ways within the limits defined by the claims.

## Claims

1. Fastener for a sunshade, which fastener has gripping means (12, 14) for attaching to an edge rail (100) of the sunshade and a suspension element (22) for attaching to an edge profile (200) of a glazing, the suspension element (22) comprising a support surface to be placed against the edge profile (200) or part of the edge profile, whereby the suspension element (22) comprises a supporting element (20), a base (24) and a first side (26), whereby the edge profile (200) or part of the edge profile of the glazing can be loosely fitted between the supporting element (20) and the first side (26), and whereby the suspension element is dimensioned to loosely surround part of the edge profile (200) of the glazing and whereby said support surface has at least one friction element increasing the friction between the edge profile (200) and the support surface, **characterized in that** the fastener is a substantially rigid piece, **in that** the at least one friction element comprises a substantially rigid projection (34a, 34b, 34c) protruding from the level of the support surface, the projection (34a, 34b, 34c) being provided with at least one point (36) to be mounted against the edge profile (200) of the glazing, and **in that** the at least one friction element is located in the base.

2. Fastener according to claim 1, **characterized in that** the supporting element (20), the base (24) and the first side (26) form a chute with a mouth, the width of the mouth being smaller than the width of the inner part the chute.

3. Fastener according to claim 1, **characterized in that** said projection (34a, 34b, 34c) has a first point (34a) to be placed against the edge profile (200) of the glazing, the point pointing to a first direction, and a second point (34b) pointing to a second direction.

4. Fastener according to one of the claim 1 or 3, **characterized in that** the base (24) has a first end (38) and a second end (40) and that said projections (34a, 34b, 34c) are formed by shaping at least part of the first end (36) and/or second end (40) as a projection (34a, 34b, 34c) protruding from the level of the support surface.

5. Fastener according to any of the claims 1-4, **characterized in that** said friction element comprises a flexible layer (50) covering at least part of the support surface, the material of the flexible layer being preferably rubber, plastic, neoprene or silicon.

6. Fastener according to any of the claims 1-5, **characterized in that** the said friction element comprises an adhesive or glue surface (52) covering at least part of the support surface.

7. Fastener according to any of the claims 1-6, **characterized in that** the fastener is formed of a metal plate, preferably steel or aluminium plate.

8. Fastener according to any of the claims 1-7, **characterized in that** the said gripping means (12, 14) for attaching to the edge rail (100) of the sunshade comprises a first fastening projection (12) attachable to the first part of the edge rail (100) and a second fastening projection (14) attachable to the second part of the edge rail (100).

## Patentansprüche

1. Befestigungselement für einen Sonnenschutz, wobei das Befestigungselement Greifmittel (12, 14) zum Befestigen an einer Kantenschiene (100) des Sonnenschutzes und ein Aufhängungselement (22) zum Befestigen an einem Kantenprofil (200) einer Verglasung aufweist, wobei das Aufhängungselement (22) eine Stützfläche umfasst, die auf dem Kantenprofil (200) oder einem Teil des Kantenprofils platziert werden soll, wobei das Aufhängungselement (22) ein Stützelement (20), ein Unterteil (24) und eine erste Seite (26) umfasst, wobei das Kantenprofil (200) oder ein Teil des Kantenprofils der Verglasung lose zwischen dem Stützelement (20) und der ersten Seite (26) angebracht werden kann und wobei das Aufhängungselement dazu bemessen ist, einen Teil des Kantenprofils (200) der Verglasung locker zu umgeben und wobei die Stützfläche mindestens ein Reibungselement aufweist, das die Reibung zwischen dem Kantenprofil (200) und der Stützfläche erhöht, **dadurch gekennzeichnet, dass** das Befestigungselement ein im Wesentlichen starres Stück ist, dass das mindestens eine Reibungselement einen im Wesentlichen starren Vorsprung (34a, 34b, 34c) aufweist, der auf der Höhe der Stützfläche hervorragt, wobei der Vorsprung (34a, 34b, 34c) mit mindestens einer Stelle (36) versehen ist, die auf das Kantenprofil (200) der Verglasung montiert werden soll, und dass sich das mindestens eine Reibungselement in dem Unterteil befindet.

2. Befestigungselement nach Anspruch 1, **dadurch gekennzeichnet, dass** das Stützelement (20), das Unterteil (24) und die erste Seite (26) eine Rinne mit einer Öffnung bilden, wobei die Breite der Öffnung kleiner als die Breite des Innenteils der Rinne ist.

3. Befestigungselement nach Anspruch 1, **dadurch gekennzeichnet, dass** der Vorsprung (34a, 34b, 34c) eine erste Stelle (34a), die auf dem Kantenprofil (200) der Verglasung platziert werden soll, wobei der Punkt in eine erste Richtung weist, und eine zweite Stelle (34b) aufweist, die in eine zweite Richtung weist.

4. Befestigungselement nach einem der Ansprüche 1 oder 3, **dadurch gekennzeichnet, dass** das Unterteil (24) ein erstes Ende (38) und ein zweites Ende (40) aufweist, und dass die Vorsprünge (34a, 34b, 34c) durch Formen mindestens eines Teils des ersten Endes (36) und/oder des zweiten Endes (40) als ein Vorsprung (34a, 34b, 34c) gebildet sind, der auf der Höhe der Stützfläche hervorragt.

5. Befestigungselement nach einem der Ansprüche 1-4, **dadurch gekennzeichnet, dass** das Reibungselement eine flexible Schicht (50) umfasst, die mindestens einen Teil der Stützfläche abdeckt, wobei das Material der flexiblen Schicht vorzugsweise Gummi, Kunststoff, Neopren oder Silikon ist.

6. Befestigungselement nach einem der Ansprüche 1-5, **dadurch gekennzeichnet, dass** das Reibelement einen Klebstoff oder eine Klebefläche (52) umfasst, der bzw. die mindestens einen Teil der Stützfläche abdeckt.

7. Befestigungselement nach einem der Ansprüche 1-6, **dadurch gekennzeichnet, dass** das Befestigungselement aus einer Metallplatte gebildet ist, vorzugsweise aus einer Stahl- oder Aluminiumplatte.

8. Befestigungselement nach einem der Ansprüche 1-7, **dadurch gekennzeichnet, dass** das Greifmittel (12, 14) zum Befestigen an der Kantenschiene (100) des Sonnenschutzes einen ersten Befestigungsvorsprung (12), der an dem ersten Teil der Kantenschiene (100) angebracht werden kann, und einen zweiten Befestigungsvorsprung (14) umfasst, der an dem zweiten Teil der Kantenschiene (100) angebracht werden kann.

## Revendications

1. Attache pour pare-soleil, laquelle attache a des moyens de préhension (12, 14) pour la fixation à un rail de bord (100) du pare-soleil et un élément de suspension (22) pour la fixation à un profil de bord (200) d'un vitrage, l'élément de suspension (22) comprenant une surface de support destinée à être placée contre le profil de bord (200) ou une partie du profil de bord, l'élément de suspension (22) comprenant un élément de support (20), une base (24) et un premier côté (26), par lequel le profil de bord (200) ou une partie du profil de bord du vitrage peut être fixée de manière lâche entre l'élément de support (20) et le premier côté (26), et par lequel l'élément de suspension est dimensionné pour entourer de manière lâche une partie du profil de bord (200) du vitrage et par lequel ladite surface de support présente au moins un élément de friction augmentant le frottement entre le profil de bord (200) et la surface de support, **caractérisée en ce que** l'attache est une pièce sensiblement rigide, **en ce que** l'au moins un élément de friction comprend une saillie substantiellement rigide (34a, 34b, 34c) dépassant du niveau de la surface de support, la saillie (34a, 34b, 34c) étant pourvue d'au moins un point (36) destiné à être monté contre le profil de bord (200) du vitrage, et **en ce que** l'au moins un élément de friction est situé dans la base.

2. Attache selon la revendication 1, **caractérisée en ce que** l'élément de support (20), la base (24) et le premier côté (26) forment une goulotte avec une bouche, la largeur de la bouche étant inférieure à la largeur de la partie intérieure de la chute.

3. Attache selon la revendication 1, **caractérisée en ce que** ladite saillie (34a, 34b, 34c) a un premier point (34a) destiné à être placé contre le profil de bord (200) du vitrage, le point pointant vers une première direction, et un second point (34b) pointant vers une seconde direction.

4. Attache selon l'une des revendications 1 ou 3, **caractérisée en ce que** la base (24) présente une première extrémité (38) et une seconde extrémité (40) et que lesdites saillies (34a, 34b, 34c) sont formées par façonnage d'au moins une partie de la première extrémité (36) et/ou de la seconde extrémité (40) sous forme de saillie (34a, 34b, 34c) dépassant du niveau de la surface de support.

5. Attache selon l'une quelconque des revendications 1 à 4, **caractérisée en ce que** ledit élément de friction comprend une couche flexible (50) recouvrant au moins une partie de la surface de support, le matériau de la couche flexible étant de préférence du caoutchouc, du plastique, du néoprène ou du silicium.

6. Attache selon l'une quelconque des revendications 1 à 5, **caractérisée en ce que** ledit élément de friction comprend une surface adhésive ou de colle (52) couvrant au moins une partie de la surface de support.

7. Attache selon l'une quelconque des revendications 1 à 6, **caractérisée en ce que** l'attache est formée d'une plaque de métal, de préférence une plaque d'acier ou d'aluminium.

8. Attache selon l'une quelconque des revendications 1 à 7, **caractérisée en ce que** lesdits moyens de préhension (12, 14) pour la fixation au rail de bord (100) du pare-soleil comprennent une première saillie de fixation (12) pouvant être fixée à la première partie du rail de bord (100) et une seconde saillie de fixation (14) pouvant être fixée à la seconde partie du rail de bord (100).
